# EUROPÄISCHE PATENTSCHRIFT

(11) **EP 3 440 433 B1**
(45) Veröffentlichungstag und Bekanntmachung des Hinweises auf die Patenterteilung: **08.04.2020**
(21) Anmeldenummer: 17705811.2
(22) Anmeldetag: 06.02.2017
(51) Int. Cl.: G01C 21/20, G01C 21/28, G01C 21/36, G06K 9/00, G06T 7/73

(54) **VERFAHREN ZUR BESTIMMUNG EINER POSE EINES WENIGSTENS TEILAUTOMATISIERT FAHRENDEN FAHRZEUGS MITTELS SPEZIELL AUSGEWÄHLTER UND VON EINEM BACKEND- SERVER ÜBERTRAGENER LANDMARKEN**
METHOD FOR DETERMINING A POSE OF AN AT LEAST PARTIALLY AUTONOMOUSLY MOVING VEHICLE USING SPECIALLY SELECTED LANDMARKS TRANSMITTED FROM A BACK END SERVER
PROCÉDÉ POUR DÉTERMINER UNE POSE D'UN VÉHICULE, SE DÉPLAÇANT DE MANIÈRE AU MOINS PARTIELLEMENT AUTOMATISÉE, AU MOYEN DE POINTS D'INTÉRÊT SPÉCIALEMENT SÉLECTIONNÉS ET TRANSMIS PAR UN SERVEUR PRINCIPAL

(30) Priorität: 08.04.2016 DE 102016205868
(43) Veröffentlichungstag der Anmeldung: 13.02.2019
(73) Patentinhaber: Robert Bosch GmbH, 70442 Stuttgart (DE)
(72) Erfinder: ROHDE, Jan, 70192 Stuttgart (DE); MIELENZ, Holger, 73760 Ostfildern (DE)
(86) Internationale Anmeldenummer: PCT/EP2017/052487
(87) Internationale Veröffentlichungsnummer: WO 2017/174230

(56) Entgegenhaltungen:
- DE-A1-102014 214 327
- JP-A- H0 798 800
- JP-A- 2008 051 612
- US-A1- 2005 149 256

## Beschreibung

Die Erfindung betrifft ein Verfahren zur Bestimmung einer Pose eines wenigstens teilautomatisiert fahrenden Fahrzeugs mittels Landmarken, wobei das Fahrzeug Detektoren aufweist, mit denen die Landmarken erfasst werden, und wobei ein Backend - Server vorgesehen ist, mit dem Landmarkendaten der Landmarken aus einer Karte an ein Fahrzeugsteuerungssystem des Fahrzeugs übertragen werden.

### STAND DER TECHNIK

Die DE 10 2014 214327 A1 offenbart eine Steuervorrichtung zum Steuern eines Fahrzeugs, mit einer Kommunikationsschnittstelle, welche ausgebildet ist, Geländedaten zu einem von dem Fahrzeug zu befahrenden Gelände zu empfangen.

Die JP HO7 98800 A offenbart Fahrtroutenplanungsmittel zum Planen einer Fahrtroute von der aktuellen Fahrzeugposition zu einem vorbestimmten Fahrziel unter Verwendung der Kartendatenbank.

Die US 2005/149256 A1 offenbart eine Vorrichtung zum Bestimmen einer bestimmten Position, wobei die Vorrichtung ein Navigationssystem zum Bestimmen der Position in Bezug auf vordefinierbare, die Umgebung beschreibende Informationsdaten, einen Speicher zum Speichern der Informationsdaten, Mittel zum Erfassen von Änderungen in der Umgebung in Bezug auf die Informationsdaten und Mittel zum Erfassen von Änderungen in den Informationsdaten und zum Erzeugen neuer Informationsdaten aufweist.

Die JP 2008 051612 A offenbart eine Kamera zum Fotografieren der Außenseite eines Fahrzeugs, eine Bildverarbeitungsvorrichtung zum Erkennen von Landmarken um die im Kamerabild dargestellte Straße, eine Kartendatenspeichervorrichtung zum Speichern der Positionsinformationen der Landmarke, ein Positionierungsmittel zum Positionieren der aktuellen Position, eine Karte und eine Landmarken-Sammelvorrichtung zum Sammeln von Landmarkeninformationen auf der in der Datenspeichervorrichtung gespeicherten Karte mit Landmarkeninformationen, die durch Bilderkennung durch die Bildverarbeitungsvorrichtung erhalten werden.

Unter Pose wird im Technikbereich die räumliche Lage eines Objekts, nämlich die Position und die Orientierung eines Objektes im zweidimensionalen Raum oder im dreidimensionalen Raum verstanden.

Das Verfahren zur Bestimmung der Pose des Fahrzeugs beruht dabei wenigstens zusätzlich auf Landmarken verschiedener Typen in der Umgebung des Fahrzeugs, wobei eine Posenbasis beispielsweise GPS-Daten darstellen können. Dabei können Posendaten des Fahrzeugs basierend auf GPS-Daten angereichert werden mit Daten, die aus der Erkennung von Landmarken generiert werden. Insbesondere die Ausrichtung, beispielsweise die Fahrtrichtung des Fahrzeugs kann mit Hilfe von Landmarken weitgehend bestimmt werden. Die Genauigkeit der Bestimmung der Pose des Fahrzeugs basierend auf Landmarken ist dabei größer als die Genauigkeit der Bestimmung mit GPS-Daten. Bei teilautomatisiert fahrenden Fahrzeugen, insbesondere bei zukünftig vollautomatisiert fahrenden Fahrzeugen ist dabei die reine GPS-Navigation zur Führung des Fahrzeuges nicht mehr ausreichend, und es müssen Systeme Anwendung finden, die die unmittelbare Umgebung des Fahrzeuges erfassen und insbesondere unter Erkennung von Landmarken die Führung des Fahrzeugs vornehmen. Der Begriff des Fahrzeugsteuerungssystems umfasst dabei im Wesentlichen alle Komponenten, die zur Erfassung der Pose, der Auswertung der Daten und schließlich der Steuerung des Fahrzeuges notwendig sind. Insbesondere umfasst das Fahrzeugsteuerungssystem Detektoren wie Laser-, Radar-, Infrarotsensoren, kapazitive Sensoren, LIDAR-Sensoren und/oder eine Videobilderfassung.

Hierzu offenbart beispielsweise die DE 10 2014 206 901 A1 ein Verfahren zur Bestimmung der Pose eines wenigstens teilautomatisiert fahrenden Fahrzeugs in einer Umgebung. Die Situationserkennung beruht dabei zum einen auf einer Umfelderfassung mittels einer Umfeldsensorik, umfassend Ultraschall-, Laser-, Radar-, Infrarot- und kapazitive Sensoren, LIDAR-Sensoren und/oder eine Videobilderfassung. Dabei soll die Situationserkennung bei der Bewegung des Fahrzeugs im Verkehr auf der Detektion von Objekten außerhalb des Fahrzeugs beruhen, wobei Hinweisgeber relevant sind, welche auch auf eine bestimmte Situation hinweisen. Diese können beispielsweise optische Markierungen, Objekte oder Begrenzungen sein. Zusätzlich oder alternativ können zur Verbesserung der Genauigkeit der Situationserkennung weitere Technologien zur Lokalisierung eingesetzt werden, so können Geodaten mittels eines GPS-Systems oder digitale Karten mit Landmarken in Kombination mit einer Odometrie ermittelt werden. Landmarken sind dabei Objekte in der unmittelbaren Umgebung des Fahrzeugs, beispielsweise jedoch auch Verkehrszeichen wie Ampeln und dergleichen sowie Fahrbahnmarkierungen.

Als Grundlage für die Wahrnehmung des Umfeldes des Fahrzeugs werden also Messdaten mittels Detektoren verwendet, aus welchen mit Hilfe der Detektoralgorithmen Objekte extrahiert werden können. Anhand dieser Objekte kann das Fahrzeugumfeld modelliert werden, um somit beispielsweise eine Trajektorie für das eigene Fahrzeug zu planen und sonstige Handlungsentscheidungen treffen zu können.

Die Güte des Umfeldmodells hängt dabei stark von der verwendeten Umfeldsenorik ab. Diese unterscheiden sich systembedingt in ihren Messeigenschaften bezüglich der Genauigkeit und der Reichweite und deren Leistungsfähigkeit weist in der Regel eine signifikante Abhängigkeit von Umweltbedingungen wie zum Beispiel Regen, Nebel, Sonneneinstrahlung oder künstliche Beleuchtung auf. Beispielsweise kann eine Fahrbahnmarkierung bei nasser Fahrbahn insbesondere bei Dunkelheit nicht zuverlässig als Landmarke dienen, da eine nasse Fahrbahn insbesondere bei Dunkelheit und Nässe spiegeln kann, sodass entsprechende Detektoren nicht aktiviert werden können, andere Detektoren funktionieren bei diesen Witterungsverhältnissen allerdings weiter, beispielsweise aktive Lichtquellen.

Von den Einflussfaktoren sind jedoch nicht alle Arten von Landmarken gleichermaßen betroffen. Beispielsweise sind Signalanlagen unabhängig von den Witterungsverhältnissen in aller Regel gut erfassbar, wohingegen bei beispielsweise optisch arbeitenden Erfassungssystemen mit gegenständlichen Objekten in der unmittelbaren Umgebung des Fahrzeugs nicht bei allen Lichtverhältnissen zuverlässig ein entsprechendes Umfeld modelliert werden kann.

Als wichtige zusätzliche Quelle zur Pose des Fahrzeugs werden in zunehmendem Maße neben der Informationen auf Basis der Sensormessdaten der Detektoren am oder im Fahrzeug Informationen aus Karten verwendet. Diese können von einem zentralen Karten- bzw. Backend - Server an das jeweilige Fahrzeug übertragen werden, im Folgenden vereinfachend als ein Backend - Server bezeichnet. In dem Fahrzeugsteuerungssystem werden dann die Umfeldinformationen, die mittels der Fahrzeugdetektoren erfasst wurden, mit den Umfeldinformationen fusioniert, sodass eine meist erheblich höhere Güte zur Erzeugung eines Umfeldmodells erzielbar ist.

Werden alle Landmarken aus der Karte mittels des Backend - Servers an das Fahrzeugsteuerungssystem übermittelt, so wird eine erhebliche Informationsdichte geschaffen, die eine verfügbare Bandbreite des Kommunikationskanals zwischen dem Backend-Server und dem Fahrzeugsteuerungssystem des Fahrzeugs unnötig stark auslastet. Auch die Rechenleistung des Fahrzeugsteuerungssystems ist hardwareseitig begrenzt, sodass es wünschenswert ist, die Menge an vom Backend - Server an das Fahrzeugsteuerungssystem übertragenen Daten und damit ausgelösten Detektoralgorithmen zu reduzieren.

### OFFENBARUNG DER ERFINDUNG

Aufgabe der Erfindung ist die Weiterbildung eines Verfahrens zur Bestimmung einer Pose wenigstens eines teilautomatisiert fahrenden Fahrzeugs, wobei das Verfahren derart ausgebildet sein soll, dass eine möglichst begrenzte Datenmenge vom Backend - Server an das Fahrzeugsteuerungssystem übertragen wird. Auch soll die notwendige Rechenleistung und die zu verarbeitende Datenmenge für das Fahrzeugsteuerungssystem reduziert werden. Dabei soll das teilautomatisiert fahrende Fahrzeug unverändert sicher geführt werden können.

Diese Aufgabe wird ausgehend von einem Verfahren gemäß dem Oberbegriff des Anspruchs 1 und ausgehend von einem System gemäß Anspruch 6 mit den jeweils kennzeichnenden Merkmalen gelöst. Vorteilhafte Weiterbildungen der Erfindung sind in den abhängigen Ansprüchen angegeben.

Das Verfahren umfasst wenigstens die folgenden Schritte: Übermittlung von Detektionsmeldungen über erfasste Landmarken vom Fahrzeugsteuerungssystem an den Backend - Server, Übersendung von Daten über Umwelteinflüsse von einem Informationsdienst an den Backend - Server, welche Umwelteinflüsse die Erfassung von Landmarken mittels der Detektoren des Fahrzeugs beeinflussen, statistische Auswertung von Umwelteinflüssen auf spezifische Typen von Landmarken auf Basis der Detektionsmeldungen und Auswahl von Landmarken abhängig von der statistischen Auswertung und von aktuellen Umwelteinflüssen und Übertragung der Auswahl von Landmarken vom Backend - Server auf das Fahrzeugsteuerungssystem.

Die Erfindung beruht damit auf folgenden Vorgängen: Auf dem Karten-/ oder Backend-Server ist in einem Kartenspeicher eine landmarkenbasierte Karte abgespeichert, und Landmarken werden von dem Backend-Server an das Fahrzeugsteuerungssystem im Fahrzeug übertragen. Über die Umfeldsensorik können diese Landmarken dann vom Fahrzeugsystem detektiert und mit den übertragenen Landmarkendaten fusioniert werden. Durch dieses sogenannte Matching der detektierten Landmarkendaten mit denen vom Backend-Server wird eine Fahrzeuglokalisierung ermöglicht. Im Idealfall werden dabei nur diejenigen Landmarken übertragen, welche von dem Fahrzeugsystem auch detektiert werden können und die zu einem anforderungsgerechten Detailgehalt des fahrzeugseitigen Umfeldmodells führen.

Die Ermittlung der tatsächlich benötigten und sinnvollerweise zu übertragenen Landmarken ist dabei das mit dem erfindungsgemäßen Verfahren erreichte Ziel.

Das Fahrzeugsteuerungssystem sendet erfindungsgemäß eine Detektionsmeldung für jede einzelne empfangene Landmarke an den Backend - Server. Weiterhin empfängt der Backend - Server beispielsweise Wetterdaten, wobei zusätzlich noch weitere Daten empfangen werden können. Auf Basis der empfangenen Detektionsmeldungen und den weiteren Informationen, also z.B. Wetterdaten, wird eine statistische Analyse der lokalen Relevanz einzelner Landmarken oder Landmarkentypen durchgeführt. Auf dieser Basis können zuverlässige Aussagen über die Relevanz von Landmarken unter bestimmten Umweltbedingungen, also beispielsweise Wetter- und Tagezeitbedingungen getroffen werden.

Zum Beispiel kann sich in einem Kreuzungsbereich eine Vielzahl verschiedener Verkehrszeichen befinden. Vormittags sind diese auf Grund guter Lichtverhältnisse gut mit einem ersten Detektortyp, beispielsweise mit einem Stereovideo System, detektierbar und ermöglichen eine genaue Lokalisierung. Während der Berufsverkehrszeit am Morgen sind die Lichtbedingungen zwar vergleichbar, jedoch führt der dichte Verkehr zu einer sehr hohen Verdeckungsrate. Daher sind diese Verkehrszeichen zu dieser Tageszeit nicht oder nur unzuverlässig detektierbar und werden daher nicht an das Fahrzeug übertragen. Der entsprechende Detektortyp wird damit deaktiviert. Straßenlaternen hingegen lassen sich auf Grund ihrer Höhe trotz des dichten Verkehrs detektieren. Aus diesem Grund werden morgens diese Landmarken mit übertragen. Auf Grund der weniger vorteilhaften Detektoralgorithmen für die Straßenlaternen werden mit abnehmender Verkehrsdichte jedoch wieder die Verkehrszeichen übertragen. Bei Dunkelheit können beispielsweise aktive Lichtquellen als Landmarken verwendet werden, sodass ein zweiter Detektortyp aktiviert wird. Diese Regeln können durch das erfindungsgemäße System aus den Detektionsmeldungen und weiteren Informationen über die Umweltbedingungen abgeleitet werden. Das Prinzip lässt sich sowohl auf Landmarkentypen wie beispielsweise Verkehrszeichen als auch auf einzelne Landmarken, also z.B. ein bestimmtes Verkehrszeichen an einer festen Position anwenden.

Die Nutzung von Landmarken, die bei entsprechenden Umwelteinflüssen sensierbar sind, führt zu einer Ressourcenschonung der Übertragungsmittel zwischen dem Backend - Server und dem Fahrzeugsteuerungssystem und zu einer Speicherschonung im Fahrzeugsteuerungssystem. Werden auf Grundlage des erfindungsgemäßen Verfahrens nur solche Landmarkendaten vom Backend - Server an das Fahrzeugsteuerungssystem übertragen, die abhängig von den erkannten aktuellen Umweltbedingungen, also vorrangig abhängig von der Tageszeit und von Witterungseinflüssen, auch sinnvoll vom Fahrzeugsteuerungssystem genutzt werden können, um ein Umfeldmodell entsprechend hoher Güte zu erzeugen, so entsteht eine insgesamt höhere Datengüte.

Die Umwelteinflüsse sind beispielsweise gebildet durch das Wetter, die Tageszeit, den Verkehr, die Sicht, die Lichtverhältnisse und/oder Nässe, wie auch Straßenmarkierungen, Stau, starker Gegenverkehr, der Landmarken abdecken kann, vorausfahrende Fahrzeuge und dergleichen. Die Umwelteinflüsse werden mittels Umweltsensoren des Fahrzeugs detektiert und werden an das Fahrzeugsteuerungssystem übermittelt.

Beispielsweise werden bei nasser, spiegelnder Straße, insbesondere bei Dunkelheit, Straßenmarkierungen außer Acht gelassen, sodass entsprechende Detektoren zur Erfassung von Straßenmarkierungen nicht aktiviert werden und eine zugeordnete Übertragung der spezifischen Daten vom Backend - Server an das Fahrzeugsteuerungssystem wird ebenfalls nicht aktiviert. Beispielsweise kann auch vorgesehen sein, bei Gegenlicht Beleuchtungseinrichtungen, beispielsweise Verkehrssignalanlagen oder die Beleuchtung von vorausfahrenden Fahrzeugen, nicht zu betrachten, da insbesondere bei Gegenlicht eine entsprechende Erfassung nicht sinnvoll möglich ist und eine entsprechende Detektionsgüte nicht erzielbar ist, sodass beispielsweise bei Gegenlicht entsprechende Signalanlagen nur einen geringeren Informationsgehalt bieten.

Gemäß der Erfindung ist ein Informationsdienst vorgesehen, mit dem bezogen auf den Ort des Fahrzeugs relevante Umwelteinflüsse an den Backend - Server übertragen werden. Ein möglicher Informationsdienst wird beispielsweise mit einem Wetterdienst gebildet, welcher an den Backend - Server Wetterdaten vom Ort oder von der Umgebung des Fahrzeugs übermittelt. Weiterhin besteht die Möglichkeit, Informationen von speziell ausgerüsteten weiteren Fahrzeugen bereitzustellen, welche den Informationsdienst bilden.

Die Detektionsmeldungen enthalten mit weiterem Vorteil für jede einzelne empfangene Landmarke mindestens eine Boolesche Variable, die eine Detektion oder Fehldetektion anzeigt. Insbesondere die Übermittlungen von Fehldetektionen sind wichtig, da damit eine korrekte statistische Auswertung der Wirkung von Umwelteinflüssen auf spezifische Typen von Landmarken erst möglich wird.

Das erfindungsgemäße Verfahren beruht insbesondere darauf, dass die statistische Auswertung von Umwelteinflüssen auf spezifische Typen von Landmarken eine Aggregation der Detektionsmeldungen umfasst, sodass mit zunehmender Anzahl von empfangenen Detektionsmeldungen der Backend - Server mit zu bevorzugenden Landmarken abhängig von den Umwelteinflüssen angelernt wird. Die statistische Auswertung erfolgt umso genauer, je mehr Detektionsmeldungen einbezogen werden und je mehr Detektionen oder Fehldetektionen in Zusammenhang mit den Umwelteinflüssen gebracht werden.

Gemäß einer weiteren vorteilhaften Verbesserung des Verfahrens wird die Auswahl der vom Backend - Server zu übertragenden Landmarkendaten bestimmter Landmarken zusätzlich in Abhängigkeit von Lokalisierungsszenarien ausgeführt. Dadurch kann eine weitere Verbesserung der Fahrzeugpose erzielt werden, und wird die Menge der Landmarkendaten in Abhängigkeit der Lokalisierungsszenarien bedarfsabhängig vergrößert oder verkleinert, entsteht der Vorteil eines kleineren Datenaufkommens zur Bestimmung der Pose des Fahrzeugs, wobei zusätzlich zu einer verringerten Übertragungsrate vom Backend - Server das Datenaufkommen zur Verarbeitung im Fahrzeugsteuerungssystem selbst verringert wird.

Die Auswahl von bestimmten Detektoren kann so von dem Fahrzeugsteuerungssystem vorgenommen werden, dass zwischen verschiedenen Detektoren umgeschaltet werden kann, beispielsweise können Detektoren und zugehörige Detektionsalgorithmen zu- oder abgeschaltet werden.

Die Erfindung richtet sich weiterhin auf ein System umfassend ein Fahrzeugsteuerungssystem zur Ausführung eines Verfahren zur Bestimmung einer Pose eines wenigstens teilautomatisiert fahrenden Fahrzeugs mittels Landmarken, wobei das Fahrzeug Detektoren aufweist, mit denen die Landmarken erfasst werden, und mit einem Backend - Server, mit dem Landmarkendaten der Landmarken aus einer Karte an ein Fahrzeugsteuerungssystem des Fahrzeugs übertragen werden. Das System ist dazu ausgebildet, wenigstens die folgenden Schritte auszuführen: Übermittlung von Detektionsmeldungen über erfasste Landmarken vom Fahrzeugsteuerungssystem an den Backend - Server, Übersendung von Daten über Umwelteinflüsse von einem Informationsdienst an den Backend - Server, welche Umwelteinflüsse die Erfassung von Landmarken mittels der Detektoren des Fahrzeugs beeinflussen, statistische Auswertung von Umwelteinflüssen auf spezifische Typen von Landmarken und Auswahl von Landmarken abhängig von der statistischen Auswertung und von aktuellen Umwelteinflüssen und Übertragung der Auswahl von Landmarken vom Backend - Server auf das Fahrzeugsteuerungssystem. Weitere Merkmale und zugeordnete Vorteile des vorstehend beschriebenen Verfahrens finden für das System mit einem Fahrzeugsteuerungssystem und mit einem Backend - Server zur Ausführung des Verfahrens ebenfalls Berücksichtigung.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Beispiel eines Aufbaus eines Fahrzeugsteuerungssystems mit einem Backend - Server zur Kommunikation mit dem Fahrzeugsteuerungssystem und
- Figur 2: ein Beispiel eines Szenarios mit einem Fahrzeug aufweisend ein Fahrzeugsteuerungssystem und wobei verschiedene Landmarken dargestellt sind.

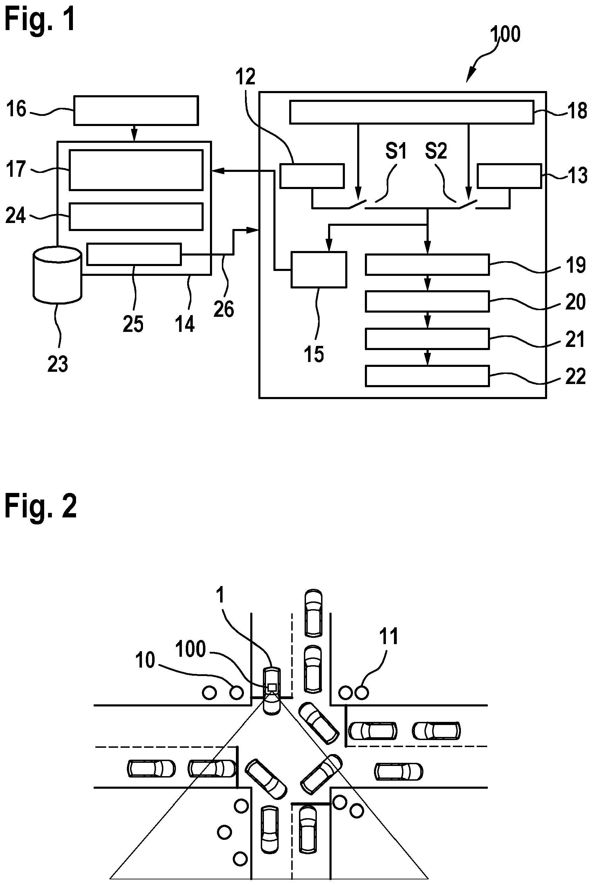

Figur 1 zeigt ein Fahrzeugsteuerungssystem 100 mit einer detaillierten Darstellung einzelner Komponenten. Weiterhin ist ein Backend - Server 14 zum Erhalt von Detektionsmeldungen 15 vom Fahrzeugsteuerungssystem 100 und zur Übermittlung von Landmarkendaten an das Fahrzeugsteuerungssystem 100 mittels eines Kommunikationskanals dargestellt.

Das Fahrzeugsteuerungssystem 100 weist mehrere Detektoren 12 und 13 auf, wobei lediglich beispielhaft zwei Detektoren 12, 13 gezeigt sind. Mit einem Modul 18 kann eine Ein- Ausschaltung bzw. eine Umschaltung der Detektoren 12, 13 mittels der Schalter S1 oder S2 erfolgen, abhängig davon, welche Art von Landmarken 10 oder 11 erkannt werden soll.

Wird entweder der Detektor 12 oder der Detektor 13 oder beide Detektoren 12 und 13 aktiviert, kann ein Umfeldmodell 19 ermittelt werden, sodass nach einer Situationsanalyse 20 schließlich eine Funktion 21 bereitgestellt werden kann, mit der mit einer Aktorik 22 eine Handlung zur Führung des Fahrzeugs 1 ausgegeben wird.

Neben dem Fahrzeugsteuerungssystem 100 ist ein Backend - Server 14 schematisch gezeigt. Dieser befindet sich beispielhaft an einem stationären Ort außerhalb des Fahrzeugs 1 und ist dazu ausgebildet, Landmarkendaten aus beispielsweise einer Karte eines Kartenspeichers 23 an das Fahrzeugsteuerungssystem 100 zu übertragen. Erfindungsgemäß erhält der Backend - Server 13 von einem Informationsdienst 16 Daten über aktuelle Umwelteinflüsse wie das Wetter, gegebenenfalls Verkehrsmeldungen und dergleichen.

Im Fahrzeugsteuerungssystem 100 werden nach vorzugsweise jeder Detektion jeweilige Detektionsmeldungen 15 an den Backend - Server 14 übermittelt, die die Information über die Tauglichkeit der Detektion umfassen. In Korrelation mit der Information der Umwelteinflüsse wird im Backend - Server 14 anschließend eine statistische Auswertung 17 der Detektionen abhängig vom Umwelteinfluss, also dem Wetter, der Tageszeit, den Lichtverhältnissen und dergleichen vorgenommen. Als Ergebnis dieser Auswertung wird eine Auswahl 24 im Backend - Server 14 getroffen, welche Landmarken 10, 11 tatsächlich geeignet sind, um an das Fahrzeugsteuerungssystem 100 mittels einer Übertragung 25 übertragen zu werden. Daten über Landmarken 10, 11, die zur Erstellung des Umfeldmodells 19 weniger geeignet sind, da diese nicht von den Detektoren 12, 13 erfasst oder erkannt werden können, werden nicht übertragen, sodass das Datenaufkommen sowohl im Kommunikationskanal 26 als auch in der internen Verarbeitung und Speicherung der Daten über die Landmarken 10, 11 innerhalb des Fahrzeugsteuerungssystem 100 erheblich reduziert wird, und es müssen weitaus weniger Detektoralgorithmen abgehandelt werden.

In dem Fahrzeugsteuerungssystem 100 werden dann die Umfeldinformationen, die mittels der Fahrzeugdetektoren 12, 13 erfasst wurden, mit den Umfeldinformationen des Backend - Servers 14 fusioniert, sodass eine höhere Güte zur Erzeugung des Umfeldmodells 19 erzielbar ist.

In Figur 2 ist ein Beispiel eines Szenarios mit einem Fahrzeug 1 aufweisend ein Fahrzeugsteuerungssystem 100 gezeigt, und mit nicht näher dargestellten Detektoren können beispielsweise die Landmarken 10 und 11 erfasst werden. Im dargestellten Kreuzungsbereich befindet sich eine Vielzahl verschiedener Verkehrszeichen, die die Landmarken 10 bilden. Vormittags sind diese auf Grund guter Lichtverhältnisse gut mit einem Detektor, beispielsweise einem Stereovideo System detektierbar und ermöglichen z.B. eine hochgenaue Lokalisierung. Während der Berufsverkehrszeit am Morgen sind die Lichtbedingungen zwar vergleichbar, jedoch führt der dichte Verkehr zu einer sehr hohen Verdeckungsrate. Daher sind diese Verkehrszeichen zu dieser Tageszeit nicht oder nur unzuverlässig detektierbar und werden daher nicht an das Fahrzeug 1 bzw. an das Fahrzeugsteuerungssystem 100 übertragen.

Straßenlaternen, die beispielsweise die Landmarke 11 bilden, lassen sich auf Grund ihrer Höhe trotz des dichten Verkehrs hingegen gut detektieren. Aus diesem Grund werden morgens diese Landmarken 11 übertragen. Auf Grund der weniger vorteilhaften Detektoralgorithmen für die Straßenlaternen werden mit abnehmender Verkehrsdichte jedoch wieder die Verkehrszeichen übertragen. Bei Dunkelheit können beispielsweise aktive Lichtquellen als Landmarken 11 verwendet werden. Diese Regeln können durch das erfindungsgemäße System aus den Detektionsmeldungen 15 und weiteren Informationen über die Umweltbedingungen abgeleitet werden. Das Prinzip lässt sich sowohl auf Landmarkentypen wie Verkehrszeichen als auch auf einzelne Landmarkentypen wie das Verkehrszeichen an einer bestimmten Position anwenden.

Die Erfindung beschränkt sich in ihrer Ausführung nicht auf das vorstehend angegebene bevorzugte Ausführungsbeispiel.

## Patentansprüche

1. Verfahren zur Bestimmung einer Pose eines wenigstens teilautomatisiert fahrenden Fahrzeugs (1) mittels Landmarken (10, 11), wobei das Fahrzeug (1) Detektoren (12, 13) aufweist, mit denen die Landmarken (10, 11) erfasst werden, und wobei ein Backend - Server (14) vorgesehen ist, mit dem Landmarkendaten der Landmarken (10, 11) aus einer Karte an ein Fahrzeugsteuerungssystem (100) des Fahrzeugs (1) übertragen werden, wobei das Verfahren wenigstens die folgenden Schritte umfasst:
- Übermittlung von Detektionsmeldungen (15) über erfasste Landmarken (10, 11) vom Fahrzeugsteuerungssystem (100) an den Backend - Server (14),
- Übersendung von Daten über Umwelteinflüsse von einem Informationsdienst (16) an den Backend - Server (14), welche Umwelteinflüsse die Erfassung von Landmarken (10, 11) mittels der Detektoren (12, 13) des Fahrzeugs (1) beeinflussen,
- statistische Auswertung (17) von Umwelteinflüssen auf spezifische Typen von Landmarken (10, 11) auf Basis der Detektionsmeldungen (15) und
- Auswahl von Landmarken (10, 11) abhängig von der statistischen Auswertung (17) und von aktuellen Umwelteinflüssen und
- Übertragung (25) der Auswahl (24) von Landmarken (10, 11) vom Backend - Server (14) auf das Fahrzeugsteuerungssystem (100).

2. Verfahren nach Anspruch 1, **dadurch gekennzeichnet, dass** die Umwelteinflüsse das Wetter, die Tageszeit, den Verkehr, die Sicht, die Lichtverhältnisse und/oder Nässe umfassen.

3. Verfahren nach Anspruch 1 oder 2, **dadurch gekennzeichnet, dass** der Informationsdienst (16) durch wenigstens einen Wetterdienst oder mittels spezieller Fahrzeuge gebildet wird, welche Daten über Umwelteinflüsse übertragen.

4. Verfahren nach einem der vorgenannten Ansprüche, **dadurch gekennzeichnet, dass** die Detektionsmeldungen (15) für jede einzelne empfangene Landmarke (10, 11) mindestens eine Boolesche Variable enthält, die eine Detektion oder Fehldetektion anzeigt.

5. Verfahren nach einem der vorgenannten Ansprüche, **dadurch gekennzeichnet, dass** die statistische Auswertung (17) von Umwelteinflüssen auf spezifische Typen von Landmarken (10, 11) eine Aggregation der Detektionsmeldungen (15) umfasst, sodass mit zunehmender Anzahl von empfangenen Detektionsmeldungen (15) der Backend - Server (14) mit zu bevorzugenden Landmarken (10,11) abhängig von den Umwelteinflüssen angelernt wird.

6. System mit einem Fahrzeugsteuerungssystem (100) und mit einem Backend - Server (14) zur Ausführung eines Verfahrens nach einem der vorgenannten Ansprüche.

## Claims

1. Method for determining a pose of a vehicle (1), which is driving in an at least partially automated manner, by means of landmarks (10, 11), wherein the vehicle (1) has detectors (12, 13) which are used to capture the landmarks (10, 11), and wherein a backend server (14) is provided and is used to transmit landmark data relating to the landmarks (10, 11) from a map to a vehicle control system (100) of the vehicle (1), wherein the method at least comprises the following steps of:
- transmitting detection messages (15) relating to captured landmarks (10, 11) from the vehicle control system (100) to the backend server (14),
- transmitting data relating to environmental influences from an information service (16) to the backend server (14), which environmental influences influence the capture of landmarks (10, 11) by means of the detectors (12, 13) of the vehicle (1),
- statistically evaluating (17) environmental influences for specific types of landmarks (10, 11) on the basis of the detection messages (15), and
- selecting landmarks (10, 11) on the basis of the statistical evaluation (17) and current environmental influences, and
- transmitting (25) the selection (24) of landmarks (10, 11) from the backend server (14) to the vehicle control system (100).

2. Method according to Claim 1, **characterized in that** the environmental influences comprise the weather, the time of day, the traffic, the view, the light conditions and/or moisture.

3. Method according to Claim 1 or 2, **characterized in that** the information service (16) is formed by at least one weather service or by means of special vehicles which transmit data relating to environmental influences.

4. Method according to one of the above-mentioned claims, **characterized in that** the detection messages (15) comprise, for each individual received landmark (10, 11), at least one Boolean variable which indicates detection or incorrect detection.

5. Method according to one of the above-mentioned claims, **characterized in that** the statistical evaluation (17) of environmental influences for specific types of landmarks (10, 11) comprises aggregating the detection messages (15), with the result that, with an increasing number of received detection messages (15), the backend server (14) is trained with landmarks (10, 11) to be preferred depending on the environmental influences.

6. System having a vehicle control system (100) and having a backend server (14) for carrying out a method according to one of the above-mentioned claims.

## Revendications

1. Procédé pour déterminer une pose d'un véhicule, se déplaçant de manière au moins partiellement automatisée (1), au moyen de points de repère (10, 11),
dans lequel le véhicule (1) comporte des détecteurs (12, 13) permettant de détecter les points de repère (10, 11), et dans lequel il est prévu un serveur principal (14) au moyen duquel des données de points de repère relatives aux points de repère (10, 11) et provenant d'une carte sont transmises à un système de commande de véhicule (100) du véhicule (1), dans lequel le procédé comprend au moins les étapes suivantes :
- transmission de messages de détection (15), concernant des points de repère détectés (10, 11), par le système de commande de véhicule (100) au serveur principal (14),
- envoi de données concernant les influences de l'environnement par un service d'information (16) au serveur principal (14), lesdites influences de l'environnement influant sur la détection des points de repère (10, 11) au moyen des détecteurs (12, 13) du véhicule (1),
- évaluation statistique (17) d'influences de l'environnement sur des types spécifiques de points de repère (10, 11) sur la base des messages de détection (15) et
- sélection des points de repère (10, 11) en fonction de l'évaluation statistique (17) et des influences actuelles de l'environnement et
- transmission (25) de la sélection (24) de points de repère (10, 11) par le serveur central (14) au système de commande de véhicule (100).

2. Procédé selon la revendication 1, **caractérisé en ce que** les influences de l'environnement comprennent les conditions météorologiques, l'heure du jour, le trafic, la visibilité, les conditions d'éclairage et/ou l'humidité.

3. Procédé selon la revendication 1 ou 2, **caractérisé en ce que** le service d'information (16) est constitué par au moins un service météorologique ou par des véhicules spéciaux qui transmettent des données concernant des influences de l'environnement.

4. Procédé selon l'une des revendications précédentes, **caractérisé en ce que** les messages de détection (15) contiennent, pour chaque point de repère individuel reçu (10, 11), au moins une variable booléenne indiquant une détection ou une fausse détection.

5. Procédé selon l'une des revendications précédentes, **caractérisé en ce que** l'évaluation statistique (17) des influences de l'environnement sur des types spécifiques de points de repère (10, 11) comprend une agrégation des messages de détection (15), de manière à soumettre le serveur central (14) à un apprentissage au moyen des points de repère (10, 11) à privilégier, en fonction des influences de l'environnement lorsque le nombre de messages de détection reçus (15) augmente.

6. Système comportant un système de commande de véhicule (100) et un serveur central (14) destiné à la mise en œuvre d'un procédé selon l'une des revendications précédentes.
